(19) Europäisches Patentamt
European Patent Office
Office européen des brevets

(11) **EP 1 667 260 A1**

(12) **EUROPEAN PATENT APPLICATION**
published in accordance with Art. 158(3) EPC

(43) Date of publication:
07.06.2006 Bulletin 2006/23

(51) Int Cl.:
*H01M 4/58* (1974.07)    *H01M 4/02* (1974.07)
*H01M 10/40* (1974.07)

(21) Application number: 04788186.7

(22) Date of filing: 27.09.2004

(86) International application number:
**PCT/JP2004/014090**

(87) International publication number:
**WO 2005/031899 (07.04.2005 Gazette 2005/14)**

(84) Designated Contracting States:
**DE**

(30) Priority: 26.09.2003 JP 2003336335
26.09.2003 JP 2003336336
26.09.2003 JP 2003336337

(71) Applicant: **MITSUBISHI CHEMICAL CORPORATION**
**Tokyo 108-0014 (JP)**

(72) Inventor: **Shima, K.,**
**c/o Mitsubishi Chem. Gr. Science & Tech**
**Yokohama-shi,**
**Kanagawa 2278502 (JP)**

(74) Representative: **HOFFMANN EITLE**
**Arabellastrasse 4**
**81925 München (DE)**

(54) **LITHIUM COMPOSITE OXIDE PARTICLE FOR LITHIUM SECONDARY BATTERY POSITIVE ELECTRODE MATERIAL AND CONTAINING THE SAME, POSITIVE ELECTRODE FOR LITHIUM SECONDARY BATTERY AND LITHIUM SECONDARY BATTERY**

(57)    An excellent positive electrode material for a lithium secondary battery is provided that can increase low-temperature load characteristics of the battery as well as improving coatability.

When measured by mercury intrusion porosimetry, the material meets Condition (A) and at least either Condition (B) or Condition (C).

Condition (A): on a mercury intrusion curve, the mercury intrusion volume from 50 MPa to 150 MPa is 0.02 cm$^3$/g or smaller.

Condition (B): on the mercury intrusion curve, the mercury intrusion volume from 50 MPa to 150 MPa is 0.01 cm$^3$/g or larger.

Condition (C): the average pore radius is within 10-100 nm, and the pore-size distribution curve has a main peak (with peak top at a pore radius of within 0.5-50 $\mu$m) and a sub peak (with peak top at a pore radius of within 80-300 nm).

FIG. 1

## Description

[Technical Field]

The present invention relates to lithium composite oxide particles used as a positive electrode material of a lithium secondary battery, and also to a positive electrode for a lithium secondary battery and a lithium secondary battery employing the same. The positive electrode material according to the present invention shows an excellent coatability and can provide a positive electrode for a secondary battery with excellent load characteristics even if used in a low-temperature environment.

[Background Art]

Recently, lithium secondary batteries have been receiving attention because of its usage as power sources for mobile electronic devices and mobile communication devices, which are being smaller in size and lighter in weight, and as a power source for a vehicle. The lithium secondary battery generally offers high output and high energy density, and for its positive electrode, a lithium transition metal composite oxide whose standard composition is expressed by $LiCoO_2$, $LiNiO_2$, $LiMn_2O_4$, or the like is used as a positive electrode active material.

Among various lithium transition metal composite oxides, noticeable as a positive electrode active material from the aspects of safety and material cost are the ones which have a layered structure similar to those of $LiCoO_2$ and $LiNiO_2$ and whose transition metal site is partly replaced with other elements such as manganese. Examples of such a lithium transition metal composite oxide are $LiNi_{(1-a)}Mn_aO_2$, produced by partly replacing the Ni site of $LiNiO_2$ with Mn, and $LiNi_{(1-\alpha-\beta)}Mn_\alpha Co_\beta O_2$, produced by partly replacing the Ni site of $LiNiO_2$ with Mn and Co, as are disclosed in Non-Patent Documents 1-3 and Patent Document 1.

Further, when such a lithium transition metal oxide as disclosed in Non-Patent Documents 1-3 and Patent Document 1 is used as a positive electrode active material, the lithium transition metal composite oxide is formed into fine particles so as to increase the contact area of the positive electrode active material surface with an electrolytic solution and improve the load characteristics. However, forming the lithium transition metal oxide into fine particles also decreases the packing efficiency of the positive electrode active material into a positive electrode and restricts battery capacity.

On the other hand, Patent Document 2 discloses that as a positive electrode active material for a nonaqueous secondary battery, porous particles of a lithium composite oxide can be used which contains at least one element selected from the group of Co, Ni and Mn together with lithium as main components, whose average pore radius obtained by pore radius distribution measurement with mercury intrusion porosimetry is in the range of 0.1-1 $\mu$m, and whose total volume of pores having diameters of between 0.01-1 $\mu$m is 0.01 $cm^3$/g or larger. The document also discloses that the use of the particles can enhance load characteristics of the resultant battery without impairing packing efficiency of the positive electrode active material into a positive electrode.

Patent Document 3 discloses that Li-Mn-Ni-Co composite oxide particles whose primary particles have the average diameter of 3.0 $\mu$m or smaller and whose specific surface area is 0.2 $m^2$/g or larger can be used as a positive electrode material for a lithium secondary battery, and that the resultant lithium secondary battery shows a high discharge capacity as well as an excellent cycle capability.

Patent Document 4 discloses that Li-Mn-Ni-Co composite oxide particles produced through the spray drying of Li-Mn-Ni-Co slurry and the subsequent calcination of the spray-dried particles can be used as a positive electrode material for a lithium secondary battery and that the resultant lithium secondary battery exhibits a high discharge capacity and an excellent cycle capability.

[Non-Patent Document 1] Journal of Materials Chemistry, Vol.6, 1996, p.1149
[Non-Patent Document 2] Journal of the Electrochemical Society, Vol.145, 1998, p.1113
[Non-Patent Document 3] The resumé of 41st Battery Symposium in Japan, 2000, p.460
[Patent Document 1] Japanese Patent Laid-Open Publication No. 2003-17052
[Patent Document 2] Japanese Patent Laid-Open Publication No. 2000-323123
[Patent Document 3] Japanese Patent Laid-Open Publication No. 2003-68299
[Patent Document 4] Japanese Patent Laid-Open Publication No. 2003-51308

[Disclosure of the Invention]

[Problem to Be Solved by the Invention]

However, according to the techniques disclosed in Non-Patent Documents 1-3 and Patent Document 1, there is a problem in that when the lithium transition metal oxide is formed into fine particles as described above, the packing efficiency of the positive electrode material into the positive electrode is restricted and adequate load characteristics therefore cannot be ensured.

The formation of fine particles also accompanies a problem that when the particles are used for coating, the coating layer becomes hard and friable in its mechanical properties and is likely to separate from a positive electrode in the reeling step of the battery assembly, so that an adequate coatability therefore cannot be ensured. The problem is obvious especially when the lithium transition metal oxide $LiNi_{(1-\alpha-\beta)}Mn_\alpha Co_\beta O_2$ has a composition in which the ratio of Ni : Mn : Co is close to $1-\alpha-\beta : \alpha : \beta$ (where $0.05 \leqq \alpha \leqq 0.5$ and $0.05 \leqq \beta \leqq 0.5$).

The lithium composite oxide particles disclosed in Patent Document 2 exhibit an increased coatability, but still have the problem of inadequate load characteristics at low temperature (low-temperature load characteristics).

Likewise, the lithium composite oxide particles for a lithium secondary battery positive electrode material disclosed in Patent Document 3 still have the problem of inadequate load characteristics at low temperature.

The lithium composite oxide particles for a lithium secondary battery positive electrode material disclosed in Patent Document 4 tend to show a low bulk density and have a problem with respect to a coatability.

With the above problems in view, an objective of the present invention is to provide lithium composite oxide particles for a lithium secondary battery positive electrode material that can improve low-temperature load characteristics of the resultant lithium secondary battery and exhibit an excellent coatability in the positive electrode production.

[Means for Solving the Problem]

As the result of eager study to solve the above problems, the present inventors have found lithium composite oxide particles that satisfy the following conditions can be used as a preferable lithium secondary battery positive electrode material with improved low-temperature load characteristics and an excellent coatability in positive electrode production. Namely, according to the measurement by mercury intrusion porosimetry, (A) the mercury intrusion volume under a particular high pressure load is equal to or smaller than a predetermined upper limit, and (B) the same mercury intrusion volume is equal to or larger than a predetermined lower limit, or (C) the average pore radius is within a predetermined range while the pore-size distribution curve has a sub peak whose peak top is in a predetermined pore radius range in addition to a conventional main peak. Based on the above finding, the inventors have achieved the present invention.

According to an aspect of the present invention, there is provided a lithium composite oxide particle for a lithium secondary battery positive electrode material that meets the following Condition (A) and at least either Condition (B) or Condition (C) when measured by mercury intrusion porosimetry.

•Condition (A):
According to a mercury intrusion curve with increase in pressure from 50 MPa to 150 MPa, the mercury intrusion volume is 0.02 $cm^3$/g or smaller.

• Condition (B) :
According to the mercury intrusion curve with increase in pressure from 50 MPa to 150 MPa, the mercury intrusion volume is 0.01 $cm^3$/g or larger.

•Condition (C):
The average pore radius is between 10 nm and 100 nm inclusive, and the pore-size distribution curve has a main peak whose peak top is at a pore radius of between 0.5 $\mu$m and 50 $\mu$m inclusive and a sub peak whose peak top is at a pore radius of between 80 nm and 300 nm inclusive.

As a preferable feature, the lithium composite oxide particle may contain at least Ni and Co.

As another preferable feature, the lithium composite oxide particle may have a composition expressed by the following composition formula (1) :

$$Li_xNi_{(1-y-z)}Co_yM_zO_2 \qquad (1)$$

where M represents at least one element selected from Mn, Al, Fe, Ti, Mg, Cr, Ga, Cu, Zn and Nb, x represents a number of $0 < x \leqq 1.2$, y represents a number of $0.05 \leqq y \leqq 0.5$, and z represents a number of $0.01 \leqq z \leqq 0.5$.

According to another aspect of the present invention, there is provided a positive electrode for a lithium secondary battery, comprising: a current collector; and a positive electrode active material layer disposed on said current collector; wherein said positive electrode active material layer contains at least the lithium composite oxide particle for a lithium secondary battery positive electrode material described above.

According to still another aspect of the invention, there is provided a lithium secondary battery comprising: a positive electrode capable of deintercalating and intercalating lithium; a negative electrode capable of intercalating and deintercalating lithium; and an organic electrolytic solution containing a lithium salt as an electrolyte; wherein said positive electrode is the positive electrode for a lithium secondary battery described above.

[Advantageous Effects of the Invention]

The lithium composite oxide particle of the present invention can improve low-temperature load characteristics of the resultant lithium secondary battery, and is also excellent in coatability when used in the production of a positive electrode. For this reason, the lithium composite oxide particle of the present invention is preferably used as a positive electrode material for a lithium secondary battery. Moreover, the use of the lithium composite oxide particle of the present invention as a positive electrode material can give a lithium secondary battery positive electrode material and a lithium secondary battery that are excellent in low-temperature load characteristics.

[Brief Description of the Drawings]

[Fig. 1] A graph showing pore-size distribution curves of the lithium composite oxide particles (positive electrode materials) of Example 1 and Comparative Examples 1, 2.
[Fig. 2] A graph enlarging a part of graph Fig. 1.

[Best Mode for Carrying Out the Invention]

Hereinafter, embodiments for the present invention will now be detailed, although the present invention should by no means be limited to the following description and allows various changes within the gist of the invention.

[I. Lithium Composite Oxide Particles]

< Mercury Intrusion Porosimetry >

Lithium composite oxide particles (hereinafter also called "the lithium composite oxide particles of the present invention", or simply called "the particles of the present invention") for used as a lithium secondary battery positive electrode material are characterized in that they fulfill particular conditions when measured by mercury intrusion porosimetry. For better grasping of the present invention, a brief description will be made firstin relation to the mercury intrusion porosimetry prior to the description of the particles of the present invention.
The mercury intrusion porosimetry is a method in which mercury is forced into pores of a sample such as porous particles in order to obtain information about the specific surface area, the pore radius distribution, and others, on the basis of the relationship between the pressure of mercury and the amount of mercury intruded into the pores.
Specifically, a container in which a sample is placed is evacuated, and then filled with mercury. Mercury does not enter the pores on the sample surface spontaneously because of its high surface tension. As pressure is applied to the mercury in the container with its amount being gradually increased, the mercury gradually enters the pores, starting from pores with larger diameters and then pores with smaller diameters. By monitoring the fluid level of mercury (i.e., the volume of mercury intruding into the pores) with continuously increasing the pressure, it is possible to obtain a mercury intrusion curve, which represents the relationship between the pressure applied to the mercury and the mercury intrusion volume.
Assuming that the pores are in cylindrical forms, the force in the direction that extrudes mercury out of the pores can be expressed by - $2\pi r\delta(\cos\theta)$ where $r$ represents the average radius of the pores, $\delta$ represents the surface tension of mercury, and $\theta$ represents the contact angle (when $\theta > 90°$, it takes a positive value). On the other hand, the force in the direction that intrudes the mercury into the pores can be expressed by $\pi r^2 P$ where $P$ represents a pressure. The balance of these forces leads to the following equations (1) and (2).
$$-2\pi r\delta(\cos\theta) = \pi r^2 P \qquad (1)$$

$$Pr = -2\delta(\cos\theta) \qquad (2)$$

It is generally assumed that the surface tension $\delta$ of mercury is approximately 480 dyn/cm and that the contact angle $\theta$ of mercury is approximately 140°. With these approximate values, the radius of the pores into which mercury is intruding under the pressure *P* can be expressed by the following equation (A).
$$r(nm) = \frac{7.5 \times 10^8}{P(Pa)} \qquad (A)$$

Consequently, there is a correlation between the pressure P applied to the mercury and the radius r of the pores into which the mercury is intruding. The mercury intrusion curve hence can be converted into a pore-size distribution curve, which represents the relationship between the pore radius and the pore volume of the sample. When the pressure P is varied from 0.1 MPa to 100 MPa, for example, measurement can be made for the pores within the range of approximately from 7500 nm to 7.5 nm.

The approximate range of pore radii that can be measured by mercury intrusion porosimetry is about 3 nm or larger at the lower limit and about 200 $\mu$m or smaller at the upper limit. Compared with nitrogen adsorption method, which is to be described below, mercury intrusion porosimetry is hence better suited for analyzing a pore distribution with respect to its larger pore radius region.

Measurement by mercury intrusion porosimetry can be carried out using an apparatus such as a mercury porosimeter, whose examples include Autopore®, manufactured by Micromeritics Corporation, and PoreMaster®, manufactured by Quantachrome Corporation.

The particles of the present invention are characterized in that when subjected to measurement by mercury intrusion porosimetry, they satisfy Condition (A) and at least either Condition (B) or Condition (C), where these conditions are defined as follows.

- Condition (A):
  According to a mercury intrusion curve with increase in pressure from 50 MPa to 150 MPa, the mercury intrusion volume is 0.02 cm$^3$/g or smaller.
- Condition (B):
  According to the mercury intrusion curve with increase in pressure from 50 MPa to 150 MPa, the mercury intrusion volume is 0.01 cm$^3$/g or larger.
- Condition (C):
  The average pore radius is between 10 nm and 100 nm inclusive, and
  the pore-size distribution curve has a main peak whose peak top is at a pore radius between 0.5$\mu$m and 50 $\mu$m inclusive and a sub peak whose peak top is at a pore radius between 80 nm and 300 nm inclusive.

< Conditions Related to Mercury Intrusion Curve (Conditions (A) and (B)) >

When a mercury intrusion curve and a pore-size distribution curve are obtained by mercury intrusion porosimetry on the particles of the present invention, the pressure region ranging from 50 MPa to 150 MPa on the mercury intrusion curve corresponds to the pore radius region ranging from 15 nm to 5 nm, i.e., an extremely minute pore radius region. Since this pore radius region approximates to the lower measurement limit described above, the fact that the mercury intrusion volume under the aforesaid pressure range is within the above particular range does not necessarily mean that the particles of the present invention have pore radii within the corresponding range. On the contrary, it is assumed that the particles of the present invention scarcely have such minute pores because the results of nitrogen adsorption method indicating that, as will be detailed below, the total volume of the pores with radii of 50 nm or smaller is usually 0.01cm$^3$/g or smaller. Consequently, it is considered that the feature related to the mercury intrusion volume under the pressure range of from 50 MPa to 150 MPa is not caused by the presence of minute pores in the particles of the present invention.

Although it has not been clarified yet despite the present inventors' investigations, it is presumed that the pressure region ranging from 50 MPa to 150 MPa in the above mercury intrusion curve corresponds to a pressure region in which a particle structure changes due to high-pressure loads. It is therefore considered that since the mercury intrusion volume in this pressure region meets the above conditions, the structural strength of the particles of the present invention against pressure stays within a particular range without being excessively high or excessively low, and that such an optimum structural strength causes preferable properties of the particles of the present invention for usage as a positive electrode material.

Specifically, according to the mercury intrusion curve with increase in pressure from 50 MPa to 150 MPa, the upper limit of the mercury intrusion volume of the particles of the present invention is usually 0.02 cm$^3$/g or smaller as defined in the above Condition (A), preferably 0.0195 cm$^3$/g or smaller, more preferably 0.019 cm$^3$/g or smaller. Particles whose mercury intrusion volume exceeds the upper limit tend to break into finer particles to an excessive degree because of its low structural strength, causing the deterioration of coatability. If they are used for coating of a positive electrode, the resultant coating layer becomes hard and friable in its mechanical properties and is likely to separate from the positive electrode in the reeling process of the battery assembly. Such particles are therefore not suitable for a positive electrode.

On the other hand, the preferable lower limit of the mercury intrusion volume of the particles of the present invention is usually 0.01 cm$^3$/g or larger as defined in the above condition (B), more preferably 0.011 cm$^3$/g or larger, further preferably 0.012 cm$^3$/g or larger. Positive electrode particles whose mercury intrusion volume is below the lower limit cannot ensure its effective contact area with an electrolytic solution to an adequate degree, so that load characteristics of the resultant battery tend to decline.

< Properties Related to Pore Radius (Condition (C)) >

- Average Pore Radius:
  The average pore radius of the particles of the present invention is, as defined in the above Condition (C), usually 10 nm or larger, preferably 12 nm or larger, and 100 nm or smaller, preferably 50 nm or smaller. The average pore radius staying within the above range means that in the particles of the present invention, pores with appropriate sizes are formed between primary particles, which are to be described below, as compared to the conventional lithium composite oxide particles. Particles whose average pore radius exceeds the upper limit are not preferable because they have such a low pore area per pore volume that when they are used as a positive electrode active material, the contact area between the positive electrode active material surface and an electrolytic solution is reduced, and that the resultant battery tends to show inadequate load characteristics. Conversely, particles whose average pore radius is below the lower limit are not preferable because when used as a positive electrode material, they cause insufficient diffusion of lithium ions into pores of the positive electrode active material, and the resultant battery tends to exhibit deteriorated load characteristics. Incidentally, in the present invention, in order to eliminate an influence of spaces between secondary particles, the average pore radius according to mercury intrusion porosimetry is calculated with respect to pores whose radii are within the range of 0.005 $\mu$m to 0.5 $\mu$m.

- Pore-size Distribution Curve:
  According to the pore-size distribution curve measured by mercury intrusion porosimetry, the particles of the present invention usually exhibit a main peak and a sub peak, which are to be explained below.
  In the present description, the term "pore-size distribution curve" means a plot of points whose abscissa indicates a pore radius of each of the points and whose ordinate indicates a value obtained by differentiating the total volume of pores whose radii are equal to or larger than the pore radius of each point per unit weight (usually, 1 g) with respect to the logarithm of the pore radius. The pore-size distribution curve is generally shown in the form of a graph connecting the plotted points. In particular, the pore-size distribution curve obtained through the measurement on the particles of the present invention by mercury intrusion porosimetry is called "the pore-size distribution curve according to the present invention."

Also, in the present description, the term "main peak" represents the largest peak among peaks on the pore-size distribution curve, and is usually related to spaces formed between secondary particles, which are to be explained below. The term "sub peak" represents each of the peaks on the pore-size distribution curve other than the main peak. Further, in the present description, the term "peak top" means a point with the greatest ordinate value in each peak of the pore-size distribution curve.

- Main Peak:
  The main peak of the pore-size distribution curve according to the present invention has a peak top whose pore radius is usually 0.5 $\mu$m or larger, preferably 0.7 $\mu$m or larger, and usually 50 $\mu$m or smaller, preferably 20 $\mu$m or smaller, and more preferably 15 $\mu$m or smaller. If porous particles whose peak top of the main peak exceeds the upper limit are used as a positive electrode material for a battery, deterioration of load characteristics of the resultant battery may arise because of inadequate lithium diffusion in the positive electrode or a lack of conductive paths. On the other hand, if porous particles whose peak top of the main peak is below the lower limit are used as a material in the production of a positive electrode, since the required amounts of an electrically conductive material and a binder increase, the packing efficiency of the active material into a positive electrode (i.e., a current collector of the positive electrode) may be restricted to thereby bring about a reduction in battery capacity. Besides, as the particles are made finer, a coating layer containing the particles becomes hard or friable in its mechanical properties and is likely to separate from the positive electrode in the reeling process of the battery assembly.

Moreover, according to the pore-size distribution curve of the present invention, the pore volume of the main peak is usually 0.1 cm$^3$/g or larger, preferably 0.15 cm$^3$/g or larger, and usually 0.5 cm$^3$/g or smaller, preferably 0.4 cm$^3$/g or smaller. Particles whose pore volume of the main peak exceeds the upper limit tend to have such a large volume of spaces between secondary particles that when used as a positive electrode material, the packing efficiency of the positive electrode active material into a positive electrode may be restricted to thereby bring about a reduction in battery capacity. Conversely, particles whose pore volume of the main peak is below the lower limit tend to have such a small volume of spaces between the secondary particles that when used as a positive electrode material, lithium diffusion between the secondary particles may be inhibited and the load characteristics of the resultant battery may be declined.

- Sub Peak:
  The pore-size distribution curve according to the present invention may preferably have, in addition to the above main peak, a particular sub peak (hereinafter called "the particular sub peak") whose peak top is within a pore radius range of usually 80 nm or larger, preferably 100 nm or larger, more preferably 120 nm or larger, and usually 300 nm or smaller, preferably 250 nm or smaller. The presence of the particular sub peak reveals the presence of spaces having pore radii within the above range between primary particles (to be described below) of the present invention. It is assumed that the presence of the spaces enables the particles of the present invention to combine low-temperature load characteristics with a favorable coatability. Particles whose peak top of the particular sub peak exceeds the upper limit of the above range are not preferable on the grounds that when they are used as a positive electrode active material, the contact area of the positive electrode active material surface with an electrolyte may be reduced and that the load characteristics of the resultant battery may tend to decline. On the other hand, porous particles whose peak top of the particular sub peak is below the lower limit are not preferable on the grounds that when they are used in production of a lithium secondary battery, diffusion of lithium ions in the pores may be inhibited and that the load characteristics may decline.

The pore volume (i.e., the ordinate value at the peak top of the particular sub peak) of the particular sub peak is usually 0.005 cm$^3$/g or larger, preferably 0.01 cm$^3$/g or larger, and usually 0.05 cm$^3$/g or smaller, preferably 0.03 cm$^3$/g or smaller. Particles whose pore volume of the particular sub peak exceeds the upper limit are not preferable on the grounds that when they are used for coating, the resultant coating layer becomes hard or friable in its mechanical properties and tends to separate from a positive electrode in the reeling step of the battery production, resulting in the worsening of coatability. On the other hand, particles whose pore volume of the particular sub peak is below the lower limit are not preferable on the grounds that when they are used as a positive electrode material in the battery production, lithium diffusion in the positive electrode is likely to be inhibited and that the load characteristics tend to decline.

The ratio between the pore volume of the main peak and that of the particular sub peak (i.e., the ratio between the ordinate value of the peak top of the main peak and that of the particular sub peak) is, as expressed in the form of [sub peak] : [main peak], usually 1:100 or larger, preferably 1:50 or larger and is usually 1:2 or smaller, preferably 1:5 or smaller. An excessively large ratio of the pore volume of the sub peak to that of the main peak is not preferable because of a tendency to worsen the coatability. On the other hand, an unduly small ratio of the pore volume of the sub peak to that of the main peak is not preferable because the low-temperature load characteristics tend to decline.

- Others:
  As long as satisfying the above restrictions, the particles of the present invention may have some pores outside the ranges of the main and the sub peaks. However, also in this case, the particular sub peak by which the present invention is characterized preferably has the maximum pore volume in the pore radius region smaller than that of the peak top of the main peak.

< Reasons for Advantageous Effects of the Present Invention >

The reasons why the particles of the present invention produce the advantageous effects of enhancing the low-temperature load characteristics of the resultant battery and improving the coatability when used for a positive electrode have not been fully elucidated despite the present inventors' investigations, but those can be broadly assumed as below.

The lithium composite oxide particles of the present invention have a particle structure with an appropriate strength, which structure allows the particles to gradually and moderately break into finer particles as the particle volume changes due to charges and discharges, differently from common lithium composite oxide particles conventionally used as a positive electrode materials in a lithium secondary battery. The effective contact area of the particles of the present invention with the electrolytic solution thereby increases to improve load characteristics required for a battery, especially those at low temperature. Presumably for the above reason the particles of the present invention can attain both improved load characteristics at low temperature and an excellent coatability.

In addition, since having pores of appropriate sizes between primary particles, the lithium composite oxide particles of the present invention, unlike the conventional particles, can increase its contact area with the electrolytic solution without extremely increasing its pore volume when used in the battery production, improving load characteristics required for a positive electrode active material, especially those at low temperature. This is perhaps another reason why the particles of the present invention can combine both improved load characteristics at low temperature with an excellent coatability.

In order to obtain the above advantageous effects (i.e., improvement in low-temperature load characteristics of the battery and improvement in coatability in the production of a positive electrode), the particles of the present invention have to always satisfy Condition (A). Concerning the remaining Conditions (B) and (C), it is sufficient that at least either Condition (B) or Condition (C) is satisfied. However, in order to obtain the above advantageous effects to a remarkable degree, it is preferable that at least Condition (B) is satisfied in addition to Condition (A).

< Other Preferable Embodiments >

The following description concerns other properties of the particles of the present invention, although they should be taken only as preferable features. The particles of the present invention should by no means be particularly restricted in its properties as long as the particles posses the above properties.

- Property in Relation to Nitrogen Adsorption Method:
  In addition to the above features regarding mercury intrusion porosimetry, the particles of the present invention preferably have a feature in that its total volume of pores whose pore radii are 50 nm or smaller measured by BJH (Barret-Joyer-Halenda) method with nitrogen adsorption method is 0.01 $cm^3$/g or smaller per unit weight of the particles.

The nitrogen adsorption method (BJH method) is a method in which a sample such as porous particles is caused to absorb nitrogen so that various kinds of information about the specific surface area, such as the pore radius distribution and the like, are obtained based on the relationship between the pressure of nitrogen and the amount of absorbed nitrogen.

Measurement with nitrogen adsorption method can be carried out selectively using various kinds of apparatuses depending on a specific manner of analyzing pore radius distribution. A typical example of such an apparatus is a measuring instrument for nitrogen adsorption pore distribution, such as Autosorb® manufactured by Quantachrome Corporation.

According to the particles of the present invention, the total volume of pores whose radii obtained by nitrogen adsorption method are 50 nm or smaller is preferably 0.05 $cm^3$/g or smaller as mentioned above, more preferably 0.01 $cm^3$/g or smaller, further preferably 0.008 $cm^3$/g or smaller. Particles whose total volume of the aforesaid pores is larger than the upper limit are not preferable on the grounds that they have a large number of pores with excessively small diameters and therefore exhibit a low packing efficiency of the active material into the positive electrode, causing a decline in battery capacity.

- Particle Shape:
  The shapes of the particles of the present invention should by no means be particularly limited, although they are generally similar to those of the conventional lithium composite oxide particles commonly used as a positive electrode active material for a lithium secondary battery. Specifically, primary particles are aggregated or sintered to form secondary particles, each of which is larger in size than the individual primary particle. Hereinafter, the term "particles of the present invention" means the secondary particles.

- Specific Surface Area:
  The specific surface area of the particles of the present invention should by no means be limited particularly, although the preferable specific surface area is usually 0.1 $m^2$/g or larger, more preferably 0.2 $m^2$/g or larger, and usually 2 $m^2$/g or smaller, more preferably 1.8 $m^2$/g or smaller. The specific surface area of particles is mainly affected by the diameters of primary particles and the degree of sintering of the primary particles. If the specific surface area of the particles exceeds the upper limit, the amount of a dispersion medium required for coating usage increases as well as the requisite amounts of an electrically conductive material and a binder also increasing, resulting in that the packing efficiency of the active material into the positive electrode is limited and that the battery capacity therefore tends to be restricted. Conversely, if the specific surface area is below the lower limit, the contact area between the particle surface and the electrolytic solution decreases in the positive electrode, bringing about the deterioration of the load characteristics of the resultant battery.

In the present description, the term "specific surface area" means a specific surface area obtained by BET (Brunauer, Emmett, and Teller) method using the nitrogen adsorption method (BET specific surface area). The BET method is a method in which the amount of adsorbate nitrogen in a monomolecular layer is obtained from an adsorption isotherm and the surface area is determined from the cross sections of the adsorbate nitrogen molecules to thereby calculate the specific surface area (BET specific surface area) of the sample. Measurement with BET method can be carried out using BET measurement apparatuses of various kinds.
- Primary Particle Diameter:
  The diameter of the primary particles forming the particles (secondary particles) of the present invention should not be limited particularly, but is preferably within the range of usually 0.5 $\mu$m or larger, more preferably 0.6 $\mu$m or larger, and 2 $\mu$m or smaller, more preferably 1.8 $\mu$m or smaller. The primary particle diameter can be affected by factors such as the diameters of milled material particles and the temperature and atmosphere of calcination process. If the primary particle diameter exceeds the upper limit, diffusion of lithium ions and electron conduction in the primary particles tend to decrease, bringing about decline in load characteristics. Conversely, if the primary particle diameter is below the lower limit of the above range, the amount of a' dispersion medium required for coating increases as well as the requisite amounts of an electrically conductive material and a binder also increasing, resulting in that the packing efficiency of the active material into the positive electrode is lowered and the battery capacity therefore tends to decline.
  The primary particle diameter is measured by observation with a scanning electron microscope (SEM). Specifically, the primary particle diameter can be calculated using a photograph with a magnification of 10,000 times, for example, by obtaining, for each of arbitrarily selected 50 primary particles, the longest length of the intercepts of horizontal lines by the left and right edges of the particle, and averaging the lengths of the 50 primary particles.

- Tap Density:
  The tap density of the particles of the present invention should by no means be particularly limited, but is usually 1.4 $g/cm^3$ or larger, preferably 1.5 $g/cm^3$ or larger, and usually 2.5 $g/cm^3$ or smaller, preferably 2 $g/cm^3$ or smaller. In the present description, the term "tap density" means a value that represents the weight of powder tapped and filled in a container in terms of powder volume. The higher tap density the particles exhibit, the better packing capability the particles are considered to offer. If the tap density of the particles exceeds the upper limit, diffusion of lithium ions through the electrolytic solution as a medium tends to be restricted in the positive electrode, causing decline in load characteristics. On the other hand, if the tap density of the particles is below the lower limit, the amount of a dispersion medium required for coating increases as well as the requisite amounts of an electrically conductive material and a binder also increasing, so that the packing efficiency of the active material into the positive electrode is lowered and the capacity of the battery therefore tends to be restricted.
  The tap density can be obtained by a method defined in JIS (Japanese Industrial Standard) K5101, or by putting particles of a predetermined weight into a graduated cylinder, tapping the put particles and measuring the volume of the particles.

- Median Diameter:
  The median value (hereinafter also called "the median diameter") of the diameters of the particles (the secondary particles) of the present invention is usually 1 $\mu$m or larger, preferably 2 $\mu$m or larger, and usually 20 $\mu$m or smaller,

preferably 15 $\mu$m or smaller. Particles whose median diameter exceeds the upper limit are not preferable on the grounds that when they are used as a positive electrode material in the battery production, lithium diffusion in the positive electrode material is inhibited and that a shortage of conductive paths occurs, bringing about decline in load characteristics of the resultant battery. On the other hand, particles whose median diameter is below the lower limit are not preferable on the grounds that they increase the amounts of an electrically conductive material and a binder required for production of a positive electrode and that the packing efficiency of the active material into a positive electrode (the current collector of the positive electrode) decreases, bringing about decline in the battery capacity. Besides, when the finer particles are used for coating, the coating layer becomes hard or friable in its mechanical properties and tends to separate from the positive electrode in the reeling process of the battery assembly. The median diameter of particles can be measured by laser diffraction/scattering method.

• Composition:
The composition of the particles of the present invention should by no means be limited, although it is preferable that they contain at least Ni and Co in view of energy density and stability in crystalline structure.

Above all, the particles of the present invention preferably have a composition expressed by the following composition formula (1).

$$Li_x Ni_{(1-y-z)} Co_y M_z O_2 \qquad \text{composition formula (1)}$$

In the above composition formula (1), M represents at least one element selected from Mn, Al, Fe, Ti, Mg, Cr, Ga, Cu, Zn and Nb. Preferably M is Mn and/or Al, and more preferably M is Mn.
Additionally, in composition formula (1), x is a value usually greater than 0, preferably 0.1 or grater, and usually 1.2 or smaller, preferably 1.1 or smaller. If x exceeds the upper limit, there is a possibility that the particles do not form a single crystal phase and that lithium is replaced with a transition metal site, resulting in that the charging and discharging capacities of the resultant lithium secondary battery tend to decline. On the other hand, the composition with x being about the lower limit corresponds to a charging state in which lithium is deintercalated. It is not preferable to charge the battery to an extent that x becomes below the lower limit because the crystalline structure of the particles may deteriorate.
In the above composition formula (1), y takes a value of usually 0.05 or larger, preferably 0.1 or larger, and usually 0.5 or smaller, preferably 0.4 or smaller. Particles having a composition in which y is larger than the upper limit are not preferable on the ground that when they are used as a positive electrode material, the capacity of the resultant battery tends to decline, and are also not preferable from the aspect of cost because Co is a rare and expensive resource. On the other hand, particles having a composition in which y is smaller than the lower limit tend to have a low stability of the crystalline structure and are therefore not preferable.
Further, in the above composition formula (1), the value of z is usually 0.01 or larger, preferably 0.02 or larger, and is usually 0.5 or smaller, preferably 0.4 or smaller. Particles having a composition in which z is larger than the upper limit are not preferable because they are difficult to form a single crystal phase and also because when they are used as a positive electrode active material, the discharge capacity of the resultant lithium secondary battery tends to decline. The composition with the value of z smaller than the lower limit is also not preferable because the stability of the crystalline structure of the particles tends to decline.

[II. Method for Producing Lithium Composite Oxide Particles]

Hereinafter, description will now be made in relation to a method (hereinafter called "the production method of the present invention") for producing particles whose composition is represented by the above formula (1) as an example of a method for producing the particles of the present invention. It is a matter of course that the particles of the present invention should by no means be limited to the products obtained by the following production method. Further, the production method for the particles whose composition is expressed by the formula (1) should by no means be limited to the following method.
The production method of the present invention uses a lithium material, a nickel material, a cobalt material and a material of element M as raw materials to produce the particles of the present invention.

< Materials >

- Lithium Material:
  The lithium material is not particularly limited as long as it contains lithium.
  The lithium material is exemplified by: inorganic lithium salts such as $Li_2CO_3$ and $LiNO_3$; lithium hydroxides such as LiOH and $LiOH \cdot H_2O$; lithium halides such as LiCl and LiI; inorganic lithium compounds such as $Li_2O$; and organic lithium compounds such as alkyl lithiums and fatty acid lithiums. In the above examples, $Li_2CO_3$, $LiNO_3$, LiOH, and acetic Li are preferable. Among them, $Li_2CO_3$ and LiOH contain neither nitrogen nor sulfur and therefore have the advantage that they generate no toxic substance in the calcination process.
  The above examples of the lithium material may be used singly, or may be used any two or more in combination at an arbitrary ratio.

- Nickel Material:
  The nickel material is not particularly limited as long as it contains nickel.
  The nickel material is exemplified by $Ni(OH)_2$, NiO, NiOOH, $NiCO_3 \cdot 2Ni(OH)_2 \cdot 4H_2O$, $NiC_2O_4 \cdot 2H_2O$, $Ni(NO_3)_2 \cdot 6H_2O$, $NiSO_4$, $NiSO_4 \cdot 6H_2O$, fatty acids containing nickel, and nickel halides. Among them, the compounds that contain neither nitrogen nor sulfur, such as $Ni(OH)_2$, NiO, NiOOH, $NiCO_3 \cdot 2Ni(OH)_2 \cdot 4H_2O$ and $NiC_2O_4 \cdot 2H_2O$, are preferable because they generate no toxic substance in the calcination process. $Ni(OH)_2$, NiO, and NiOOH are particularly preferable because of their availability as industrial materials at low costs and also because of their high reactivity during the calcination process.
  The above examples of the nickel material may be used singly, or may be used any two or more in combination at an arbitrary ratio.

- Cobalt Material:
  The cobalt material is not particularly limited as long as it contains cobalt.
  The cobalt material is exemplified by CoO, $Co_2O_3$, $Co_3O_4$, $Co(OH)_2$, CoOOH, $Co(NO_3)_2 \cdot 6H_2O$, $CoSO_4 \cdot 7H_2O$, organic cobalt compounds, and cobalt halides. Among them, CoO, $Co_2O_3$, $Co_3O_4$, $Co(OH)_2$, and CoOOH are preferable.
  The above examples of the cobalt material may be used singly, or may be used any two or more in combination at an arbitrary ratio.

- Material of Element M:
  The material of element M is not particularly limited as long as it contains element M defined in the explanation of the composition formula (1).
  The material of element M is exemplified, similarly to the above nickel material and cobalt material, by oxides, hydroxides, oxyhydroxides, a fatty acid salts and halides of element M. Above all, the oxides, the hydroxides and the oxyhydroxides are preferable.
  The above examples of the material of element M may be used singly, or may be used any two or more in combination at an arbitrary ratio.

A part or all of the nickel material, the cobalt material and the material of element M may be also selected from: coprecipitation hydroxides and coprecipitation carbonates of two or more elements selected from nickel, cobalt and element M; and composite oxides obtained by calcination any of the coprecipitation hydroxides and the coprecipitation carbonates.

< Milling and Mixing of Nickel Material, Cobalt Material and Material of Element M >

The nickel material, the cobalt material and the material of element M are dispersed in a dispersion medium and subjected to milling and mixing with a wet process to be made into a slurry. A part of the required lithium material may be previously added in this stage so that lithium is present in the slurry, being in the form of an aqueous solution or particles.
The dispersion medium to be used in the stage may be any liquid, although water is particularly preferable in view of environmental loads. However, if water-soluble compounds are used as the nickel material, the cobalt material and/or the material of element M, it is preferable to select a liquid that does not solve any of the nickel material, the cobalt material and the element M material. Otherwise hollow particles may be obtained through spray drying, which is to be described later, and the packing efficiency of the active material into the positive electrode therefore may be restricted. An apparatus used for milling and mixing of the materials should by no means be limited and can be arbitrarily selected, which apparatus is exemplified by a bead mill, a ball mill and a vibration mill.

The nickel material, the cobalt material and the material of element M are milled to such an extent that the material particles in the slurry obtained through the milling have a median diameter of usually 2 $\mu$m or smaller, preferably 1 $\mu$m or smaller, further preferably 0.5 $\mu$m or smaller. If the median diameter of the material particles is larger than the above range, reactivity in the calcination process declines. Further, the sphericity of the particles obtained through spray drying, which is to be described later, tends to be impaired to bring about decline in the final packing density of the particles. The tendency is observable especially in an attempt to produce particles with a median diameter of 20 $\mu$m or smaller.

On the other hand, since milling the materials into excessively fine powder raises the milling cost, the materials are preferably milled so as to have a median diameter of usually 0.01 $\mu$m or larger, preferably 0.02 $\mu$m or larger, further preferably 0.1 $\mu$m or larger.

< Granulation / Drying >

After the wet milling and mixing of the nickel material, the cobalt material and the material of element M, the particles dispersed in the slurry are aggregated to form larger particle objects (aggregation particles, secondary particles), i.e., subjected to granulation, concurrently with drying of the particle objects. As the method for granulation and drying, it is preferable to adopt spray drying using a spray dryer on the grounds that the resultant particle objects (aggregated particles) are superior in uniformity, powder fluidity, and powder handling capability, and that the secondary particles can be formed efficiently because granulation and drying are carried out at the same time.

The diameters of the particle objects obtained through spray drying define almost exactly those of the secondary particles, which serve as the particles of the present invention. For this reason, the particle diameter of the particle objects obtained through drying is usually 1 $\mu$m or larger, preferably 2 $\mu$m or larger, and usually 20 $\mu$m or smaller, preferably 15 $\mu$m or smaller. The particle diameter can also be controlled by selecting the spraying manner, the rate of pressured gas supply, the rate of slurry supply, the drying temperature, and/or other factors.

Alternatively, granulation and drying may also be carried out by a method other than spray drying. Another example of granulation method is coprecipitation, in which an aqueous solution containing nickel, cobalt and element M is subjected to reaction with an alkali aqueous solution to obtain a hydroxide, with the stirring rate, the pH value and the temperature being appropriately determined.

In this case, the hydroxide granulated through the coprecipitation is filtered and subjected to treatments such as washing, and subsequently dried by means of a drying oven or the like.

< Mixing with Lithium Material >

The particle objects obtained through the above granulation and drying process are then dry-mixed with the lithium material to be made into a mixture powder.

The average particle diameter of the lithium material is usually 500 $\mu$m or smaller, preferably 100 $\mu$m or smaller, further preferably 50 $\mu$m or smaller, the most preferably 20 $\mu$m or smaller in order to enhance mixing efficiency with the particle objects obtained by spray drying and to improve the capability of the resultant battery. However, since an unduly small average particle diameter may be a cause of low stability of the particles in the atmosphere, the lower limit of the average particle diameter is usually 0.01 $\mu$m or larger, preferably 0.1 $\mu$m or larger, more preferably 0.2 $\mu$m or larger, at most preferably 0.5 $\mu$m or larger.

The method for carrying out the dry-mixing should not be limited, although it is preferably carried out using a powder mixer for a general industrial use. The particle objects and the lithium material may be mixed at an arbitrary ratio, which depends on the composition or other properties of the objective porous particles.

< Classification / Calcination >

Subsequently, the obtained mixture power is subjected to calcination process, through which the primary particles are sintered to form secondary particles.

The calcination process can be carried out in an arbitrary manner, for example, using a box kiln, a tube kiln, a tunnel kiln, a rotary kiln or the like. The calcination process usually includes three steps: temperature rising; maximum temperature holding; and temperature decreasing. The second step, maximum temperature holding, should by no means be limited to a single stage but may have two or more stages as required.

Also, in the calcination process, the above steps of temperature rising, maximum temperature holding and temperature decreasing can be repeated two or more times. It is also optional to carry out a series of two calcination processes with interposing a shredding process, which dissolves aggregation to such an extent as not to destroy the secondary particles.
- Temperature Rising Step:
  In the temperature rising step, the temperature inside the kiln is increased at a rate of usually 0.2 °C/minute to 2.0 °C/minute. An excessively low increasing rate requires a long time and is therefore disadvantageous from the industrial aspect. Conversely, an excessively high increasing rate may cause the actual in-kiln temperature to disaccord with a target temperature depending on the kiln.

- Maximum Temperature Holding Step:
  The calcination temperature at the maximum temperature holding step varies depending on the kinds, composition ratios and mixed timings of the lithium material, the nickel material, the cobalt material and the material of element M that are to be used, but is usually 500 °C or higher, preferably 600 °C or higher, more preferably 800 °C or higher, and usually 1200 °C or lower, preferably 1100 °C or lower. If the calcination temperature is lower than the above lower limit, there is a tendency that a longer calcination time is needed in order to obtain particles with a good crystallinity and an appropriate strength. On the other hand, if the calcination temperature is higher than the above upper limit, the resultant porous particles may have excessive strength or a lot of defects such as oxygen deficiency. As a result, if the porous particles are used as a positive electrode active material, the resultant lithium secondary battery may be attained by decline in low-temperature load characteristics, or may deteriorate because the crystalline structure of the particles collapses due to charging and discharging.

The temperature holding time in the maximum temperature holding step is usually selected from a wide range of from 1 hour to 100 hours. An unduly short calcination time makes it difficult to obtain particles having good crystalinity and appropriate strength.
- Temperature Decreasing Step:
  In the temperature decreasing step, the temperature inside the kiln is decreased at a rate of usually 0.1 °C/minute to 20 °C/minute, inclusive. An excessively low rate requires a longer time and is therefore disadvantageous from the industrial aspect, while an excessively high rate tends to make the product lack the uniformity and to promote deterioration of the container.

- Others
  The strength of the particles of the present invention varies also depending on the calcination atmosphere. Assuming that the calcination temperature is equal, the lower content of oxygen the calcination atmosphere contains, the more rigid structure the resultant particles acquire. The atmosphere during the calcination process should therefore be selected appropriately in consideration of the calcination temperature. In general, the calcination process is preferably carried out in an atmosphere with 10 volume % or larger of oxygen, such as an air. An excessively low oxygen content may produce particles with a lot of defects such as oxygen deficiency.

The lithium composite oxide obtained through the calcination is disaggregated and classified, if necessary, and served as the particles of the present invention. Disaggregation and classification can be carried out by a known method, for example, using a vibration screen incorporated with tapping balls.

< Production Precautions >

In order to obtain the particles of the present invention, it is important to consider some points relating to the production, which points are as follows.
What is of importance is that the mixed state of the wet-milled materials of nickel, cobalt and element M with the lithium material is controlled. Specifically, it is important to confirm that in the mixture powder prior to being subjected to the calcination process, the major part of the lithium material remains outside the granulated particles produced through granulation of the wet-milled materials of nickel, cobalt and element M. Subjecting such a mixture powder to the calcination process can produce particles having appropriate strength.

However, when the materials of nickel, cobalt and element M are granulated through coprecipitation, the particles obtained through the calcination process tend to be unduly rigid in structure even if the most part of the lithium material is outside the granulated particles in the mixture powder. Accordingly, if the materials of nickel, cobalt and element M are prepared by coprecipitation, it is important that these materials are first wet-milled and then granulated into granulation particles, followed by dry-mixing with the lithium material. Thus, the particles of the present invention can be obtained.

If the major part of the lithium material is inside the granulation particles obtained by granulating the wet-milled materials of nickel, cobalt and element M, the particles obtained through the calcination process tend to be excessively weak in structure. Even in this case, it is possible to improve the strength of the particles by blending a sintering agent, although the use of such a sintering agent is attended with difficulty in control, and the resultant particles tend to be excessively rigid in structure.

For the above reason, in order to obtain the particles of the present invention, it is important that the wet-milled materials of nickel, cobalt and element M, or the granulation particles granulated from the wet-milled coprecipitation materials, are subjected to dry-mixing with the lithium material.

The specific procedure for obtaining the particles of the present invention should by no means be limited and can be selected from various manners in consideration with the kind of each material that is to be used. For example, if NiO, Co(OH)$_2$ and a manganese material such as Mn$_3$O$_4$ are used as the nickel material, the cobalt material and the material of element M, respectively, an example of the procedure is that NiO is wet-mixed with the cobalt material and the manganese material, then subjected to spray drying, and finally dry-mixed with the lithium material, as described in the Examples below.

[II. Positive Electrode for Lithium Secondary Battery]

The positive electrode for a lithium secondary battery of the present invention is characterized in that a positive electrode active material layer, which is formed on a current collector, contains the above-mentioned particles of the present invention and a binder.

The positive electrode for a lithium secondary battery of the present invention is produced by forming a positive electrode active material layer containing the particles of the present invention and a binder on a current collector.

The production of a positive electrode containing the particles of the present invention can be accomplished according to a conventional method. Specifically, the particles of the present invention and a binder, optionally together with other components such as an electrically conductive material and a thickener when required, are dry-mixed and formed into a sheet, which is attached onto a positive electrode current collector using pressure. Alternatively, these components are dissolved or dispersed in a dispersion medium to form slurry, which is applied to a positive electrode current collector and dried. Either method can produce a positive electrode active material layer on a current collector.

It is preferable to use the particles of the present invention in such a manner that their content in the positive electrode active material layer is usually 10 weight % or higher, preferably 30 weight % or higher, more preferably 50 weight % or higher, and usually 99.9 % or lower. If the content is lower than the above range, an adequate electric capacity may not be secured. Conversely, if the content is higher than the range, the positive electrode may have a shortage of strength.

As the binder, any substance can be used as long as it is stable in a dispersion medium. The binder substance is exemplified by: macromolecules forming resins such as polyethylene, polypropylene, polyethylene terephthalate, polymethylmethacrylate, aromatic polyamide, cellulose and nitrocellulose; macromolecules forming rubbers such as SBR (styrene-butadiene rubber), NBR (acrylonitrile-butadiene rubber), fluoro rubber, isoprene rubber, butadiene rubber and ethylene-propylene rubber; macromolecules forming thermoplastic elastomers such as styrene-butadiene-styrene block copolymer and hydride thereof, EPDM (ethylene-propylenediene ternary copolymer), styrene-ethylene-butadiene-ethylene copolymer, styrene-isoprene-styrene block copolymer and hydride thereof; macromolecules forming soft resins such as syndiotactic-1,2-polybutadiene, poly(vinyl acetate), ethylene-vinyl acetate copolymer and propylene-$\alpha$-olefin copolymer; fluorine macromolecules such as poly(vinylidene fluoride), polytetrafluoroethylene, perfluoro poly(vinylidene fluoride) and polytetrafluoroethylene-ethylene copolymer; and macromolecule composites having ionic conductivity of alkali metal ions (particularly lithium ions). The above examples of the binder may be used singly, or may be used any two or more in combination at an arbitrary ratio.

It is preferable to use the binder in such a manner that its content in the positive electrode active material layer is usually 0.1 weight % or higher, preferably 1 weight % or higher, further preferably 5 weight % or higher, and usually 80 weight % or lower, preferably, 60 weight % or lower, further preferably 40 weight % or lower. If the content of the binder is lower than the above range, the positive electrode active material may not be fixed securely, resulting in that the positive electrode acquires inadequate mechanical strength and that the battery capability such as the cycle performance declines. On the other hand, if the content of the binder is higher than the above range, the battery capacity or the electrical conductivity may decrease.

As the electrically conductive material, any known electrically conductive material can be used. The electrically conductive material is exemplified by various carbon materials including: metal materials such as copper and nickel; graphites such as natural graphite and artificial graphite; carbon blacks such as acetylene black; and amorphous carbons such as needle coke. The electrically conductive material may be used singly, or may be used any two or more in combination at an arbitrary ratio.

It is preferable to use the electrically conductive material in such a manner that its content in the positive electrode active material is usually 0.01 weight % or higher, preferably 0.1 weight % or higher, more preferably 1 weight % or higher, and usually 50 weight % or lower, preferably 30 weight % or lower, more preferably 15 weight % or lower. If the content of the electrically conductive material is below the range, an adequate electrical conductivity may not be secured. Conversely, if the content of the electrically conductive material is above the range, the battery capacity may decline.

The dispersion medium used for preparation of the slurry should by no means be limited as long as it can dissolve or disperse the positive electrode material, the binder, the electrically conductive material and the thickener, and may be either an aqueous medium or an organic medium.

Examples of aqueous media are water and alcohols.

Examples of organic media are: aliphatic hydrocarbons such as hexane; aromatic hydrocarbons such as benzene, toluene, xylene and methylnaphthalene; heterocyclic compounds such as quinoline and pyridine; ketones such as acetone, methyl ethyl ketone and cyclohexanone; esters such as methyl acetate and methyl acrylate; amines such as diethylene triamine and N-N-dimethyl aminopropyl amine; ethers such as dimethyl ether, ethylene oxide and tetrahydrofuran (THF); amides such as N-methyl pyrrolidone (NMP), dimethylformamide and dimethyl acetamide; and aprotic polar solvents such as hexamethyl phosphoric acid amide and dimethyl sulfoxide. When an aqueous medium in particular is used as the dispersion medium, it is preferred that the dispersion medium is blended with a thickener and made into a slurry using a latex such as SBR. The examples of the dispersion medium may be used singly, or may be used any two or more in combination at an arbitrary ratio.

The positive electrode active material layer preferably has a thickness in the range of from 10 $\mu$m to 200 $\mu$m.

A material for the positive electrode current collector is not particularly limited and can be selected arbitrarily from known materials. Examples of the materials are: metal materials such as aluminum, stainless steel, nickel plating, titanium and tantalum; and carbon materials such as carbon cross and carbon paper. Among them, it is preferred to use metal materials, especially aluminum.

The current collector may be made into any form, examples of which include: in the case of a metal material, a metal foil, a metal column, a metal coil, a metal plate, a metal film, an expanded metal, a punched metal, a metal foam and others; and in the case of a carbon material, a form selected from a carbon plate, a carbon film, a carbon column and others; among which examples a metal film is preferable. If the current collector is made in a film, it may be formed in a mesh shape as required. The thickness of the film is not limited but is usually 1 $\mu$m or larger, preferably 3 $\mu$m or larger, more preferably 5 $\mu$m or larger, and usually 1 mm or smaller, preferably 100 $\mu$m or smaller, more preferably 50 $\mu$m or smaller. A film having a thickness below the above range may lack the strength required as the charge collector. A film having a thickness above the range is difficult to handle.

It is preferred that the positive electrode active material layer formed through coating and drying is pressed by a roller press in order to increase the packing density of the positive electrode active material.

[III. Lithium Secondary Battery]

Next description will be made in relation to the lithium secondary battery of the present invention.
The lithium secondary battery of the present invention includes positive and negative electrodes capable of absorbing and desorbing lithium and an organic electrolytic solution including a lithium salt serving as an electrolyte, and is characterized in that the positive electrode is produced using the particles of the present invention.

The negative electrode used for the lithium secondary battery of the present invention is not particularly limited as long as it is capable of absorbing and releasing lithium. It can be produced with any method, for example, by forming a negative electrode active material layer on a negative electrode current collector.

The material of the negative electrode current collector can be selected from any known materials. Examples of the materials are: metal materials such as copper, nickel, stainless steel and nickel-plated steel; and carbon materials such as carbon cross and carbon paper. A metal material may be made into a form selected from a metal foil, a metal column, a metal coil, a metal plate, a metal film and the like, while a carbon material may be made into a form selected from a carbon plate, a carbon film, a carbon column and the like. Among them, a metal film is preferable. If the current collector is made into a film, it may be formed in a mesh shape as required. The thickness of the film should not be limited but is usually 1 $\mu$m or larger, preferably 3 $\mu$m or larger, more preferably 5 $\mu$m or larger, and usually 1 mm or smaller, preferably 100 $\mu$m or smaller, more preferably 50 $\mu$m or smaller. A film having a thickness below the above range may acquire adequate strength required as the charge collector. On the other hand, a film having a thickness above the range is difficult to handle.

The negative electrode active material contained in the negative electrode active material layer can be made from any material as long as it can electrochemically absorb and desorb lithium ions, although it is usually made from a carbon material capable of absorbing and desorbing lithium because of its high safety.

Examples of the carbon materials are: graphites such as artificial graphite and natural graphite; and thermal decomposition products of organic compounds obtained under various thermal-decomposition conditions. The thermal decomposition products of organic compounds are exemplified by: coal coke; petroleum coke; carbide of petroleum pitch; carbide of petroleum pitch; carbide of oxidized coal or petroleum pitch; carbides of needle coke, pitch coke, phenol resins, crystal celluloses and the like; carbon materials obtained by partially graphitizing the above materials; and furnace black, acetylene black, pitch carbon fibers and others. In the above examples, it is preferred to use graphites, especially an artificial graphite produced through high-temperature heat treatment of tin-graphite pitch made from various materials, a purified natural graphite, and pitch-containing graphite materials thereof, having been subjected to various surface treatment. The above examples of carbon materials may be used singly, or may be used any two or more in combination.

When a graphite material is used, preferred is one having a d value (interlayer distance) of the lattice plane (002 plane) obtained with X-ray diffraction by means of Gakushin method (a method stipulated by Japan Society for the Promotion of Science) of usually 0.335 nm or larger and usually 0.34 nm or smaller, especially 0.337 nm or smaller. The ash content in the graphite material is usually 1 % by weight or smaller, preferably 0.5 weight % or smaller, more preferably 0.1 weight % or smaller, with respect to the weight of the graphite material. The crystallite size (Lc) of the graphite material with X-ray diffraction by means of Gakushin method is usually 30 nm or larger, preferably 50 nm or lager, more preferably 100 nm or larger. The median diameter of the graphite material obtained with laser diffraction/ scattering method is usually 1 $\mu$m or larger, preferably 3 $\mu$m or larger, further preferably 5 $\mu$m or larger, still further preferably 7 $\mu$m or larger, and is usually 100 $\mu$m or smaller, preferably 50 $\mu$m or smaller, further preferably 40 $\mu$m or smaller, still further preferably 30 $\mu$m or smaller.

The specific surface area of the graphite material according to BET method is usually 0.5 $m^2$/g or larger, preferably 0.7 $m^2$/g or larger, further preferably 1.0 $m^2$/g or larger, still further preferably 1.5 $m^2$/g or larger, and is usually 25.0 $m^2$/g or smaller, preferably 20.0 $m^2$/g or smaller, further preferably 15.0 $m^2$/g or smaller, still further preferably 10.0 $m^2$/g or smaller. When the graphite material is measured by Raman spectrum analysis using argon laser beam, the intensity ratio $I_A/I_B$ between peak $P_A$, which is detected within a range of from 1580 $cm^{-1}$ to 1620 $cm^{-1}$, and peak $P_B$, which is detected within a range of 1350-1370 $cm^{-1}$, is preferably 0 or higher and 0.5 or below, and the half value width of the peak $P_A$ is preferably 26 $cm^{-1}$ or smaller, more preferably 25 $cm^{-1}$ or smaller.

Examples of the negative electrode active material other than the carbon materials are: metal oxides such as tin oxide and silicon oxide; lithium alloys such as pure lithium and lithium aluminum alloy; and the like. These examples may be used singly or any two or more in combination, and also may be used in combination with a carbon material.

The negative electrode active material layer may be formed in the same manner as the positive electrode active material layer. Specifically, the negative electrode active material and the binder, optionally together with a thickener and an electrically conductive material, are made into a slurry with a dispersion medium, which slurry is then applied to the negative electrode current collector and dried to the negative electrode active material layer is formed. As the dispersion medium, the binder, the electrically conductive material and the thickener for the negative electrode active material, it is possible to use the same materials as used for the positive electrode active material.

The electrolyte is exemplified by organic electrolytic solution, macromolecule solid electrolyte, gel electrolyte and inorganic solid electrolyte, among which the organic electrolytic solution is preferred.

As the organic electrolytic solution, any known organic solutions can be used. Examples of organic solutions are: carbonates such as dimethyl carbonate, diethyl carbonate, propylene carbonate, ethylene carbonate and vinylene carbonate; ethers such as tetrahydrofuran, 2-methyl tetrahydrofuran, 1,4-dioxane, 1,2-dimethoxyethane, 1,2-diethoxyethane, 1,3-dioxolane, 4-methyl-1,3-dioxolane and diethyl ether; ketones such as 4-methyl-2-pentanone; sulfolane compounds such as sulfolane and methyl sulfolane; sulfoxide compounds such as dimethyl sulfoxide; lactones such as $\gamma$-butyro lactone; nitriles such as acetonitrile, propionitrile, benzonitrile, butyro nitrile and valero nitrile; chloride hydrocarbons such as 1,2-dichloro ethane; amines; esters; amides such as dimethylformamide; and phosphoric acid ester compounds such as phosphoric acid trimethyl and phosphoric acid triethyl. These examples may be used singly, or may be used any two or more in combination.

In order to dissociate the electrolyte, it is preferred that the organic electrolytic solution contains a high dielectric medium whose relative dielectric constant at 25 °C is 20 or larger. Among them, the organic electrolytic solution preferably contains an organic medium selected from ethylene carbonate, propylene carbonate, and their derivatives any of whose hydrogen atoms are replaced with a halogen atom, an alkyl group or the like. The content of the high dielectric medium in the organic electrolytic solution is usually 20 weight % or higher, preferably 30 weight % or higher, more preferably 40 weight % or higher, with respect to the entire organic electrolytic solution. Optionally it is also preferable to add to the organic electrolytic solution an additive exemplified by gases such as $CO_2$, $N_2O$, $CO$ and $SO_2$ and polysulfide $S_x^{2-}$ at an arbitrary ratio so that a desired coating layer is formed on the surface of the negative electrode to thereby enable efficient charging/discharging of lithium ions.

As the solute, any known lithium salts can be used. Examples of lithium salts are $LiClO_4$, $LiAsF_6$, $LiPF_6$, $LiBF_4$, $LiB(C_6H_5)_4$, LiCl, LiBr, $CH_3SO_3Li$, $CF_3SO_3Li$, $LiN(SO_2CF_3)_2$, $LiN(SO_2C_2F_5)_2$, $LiC(SO_2CF_3)_3$ and $LiN(SO_3CF_3)_2$. These salts may be used singly or may be used any two or more in combination at an arbitrary ratio.

The concentration of the lithium salt in the electrolytic solution is usually 0.5 mol/L or higher and 1.5 mol/L or smaller. If the concentration is either too high or too low, the conductivity may decrease and the battery characteristics may deteriorate. It is therefore preferable that the concentration is 0.75 mol/L or larger at its lower limit and 1.25 mol/L or smaller at its higher limit.

When the inorganic solid electrolyte is used for the organic electrolytic solution, it can be selected from any materials which are known to be usable as the inorganic solid electrolyte, whether crystalline or amorphous. Examples of the crystalline inorganic solid electrolyte are LiI, $Li_3N$, $Li_{(1+x)}M^1_xTi_{(2-x)}(PO_4)_3$, and $Li_{(0.5-3x)}RE_{(0.5+x)}TiO_3$ (where $M^1$ is Al, Sc, Y, or La, RE is La, Pr, Nd or Sm, and $\chi$ is a number that satisfies $0 \leqq \chi \leqq 2$). Examples of the amorphous inorganic solid electrolyte are oxide glasses such as $4.9LiI\text{-}34.1Li_2O\text{-}61B_2O_5$ and $33.3Li_2O\text{-}66.7SiO_2$. These examples may be used singly, or may be used any two or more in combination at an arbitrary ratio.

In order to prevent the occurrence of a short circuit between the electrodes, the secondary battery may preferably have a separator being interposed between the positive electrode and the negative electrode and holding the nonaqueous electrolyte.

The separator can be formed by any material in any shape as long as it is stable to the organic electrolytic solution, excellent in liquid retention, and able to surely prevent the occurrence of a short circuit between the electrodes. For example, the separator may be a microporous film, sheet or nonwoven fabric made of any macromolecule materials. Examples of macromolecule materials are nylon, cellulose acetate, nitrocellulose, polysulfone, polyacrylonitrile, poly (vinylidene fluoride), and polyolefin macromolecules such as polypropylene, polyethylene and polybutene. Among them, polyolefin macromolecules are preferable in view of chemical and electrochemical stability, and polyethylene is preferable pointing view of self-clogging temperature of the resultant battery. As the polyethylene, an ultra high molecular weight polyethylene is preferable because it is excellent in shape retaining property at high temperature. The molecular weight of polyethylene is preferably $5.0 \times 10^5$ or larger and $5.0 \times 10^6$ or smaller. Polyethylene with a small molecular weight may not maintain its molecular shape same as that at high temperature. The molecular weight is therefore preferably $1.0 \times 10^6$ or larger, more preferably $1.5 \times 10^6$ or larger. Conversely, Polyethylene with an excessively large molecular weight may have such a low fluidity that the pores of the separator may not be clogged when being heated. With the above point in view, a molecular weight the polyethylene is preferably $4.0 \times 10^6$ or smaller, more preferably $3.0 \times 10^6$ or smaller.

The configuration of the lithium secondary battery can be selected from a variety of generally adopted configurations in accordance with the usage. Examples of the configurations are: cylinder type, in which sheet electrodes and a separator are made in the form of spirals; inside-out cylinder type, in which pellet electrodes and a separator are combined; and coin type, in which pellet electrodes and a separator are layered. The lithium secondary battery of the present invention can be fabricated any known method in accordance with the desired battery configuration.

[Examples]

Hereinafter, the present invention will be explained in further detail with reference to Examples, although the present invention should by no means be limited to the Examples below.

[ Production of Lithium Composite Oxide Particles ]

< Example 1 >

NiO, $Co(OH)_2$ and $Mn_3O_4$, which serve as nickel, cobalt and manganese materials, respectively, were weighed so that the mole ratio of Ni : Co : Mn is 0.33 : 0.33 : 0.33. Pure water was added to the weighed materials to prepare a slurry. The slurry was then wet-milled by means of a circulation-type medium-stirring-type wet bead mill with stirring until the median particle diameter of the solid content in the slurry becomes 0.3 $\mu$m.

The slurry was then spray dried with a spray dryer to form approximately spherical granulated particles having the diameter of about 5 $\mu$m and consisting of the nickel, cobalt and manganese materials. To the granulated particles thus obtained, LiOH powder having the median diameter of 3 $\mu$m was added so that the mole ratio of Li becomes 1.05 relative to the total number of moles of Ni, Co, and Mn, followed by mixing with a high-speed mixer. Thus, the mixture powder of the granulated particles of the nickel, cobalt, and manganese materials and the lithium material was obtained.

The mixture powder was calcinated at 950 °C (with temperature raising and decreasing rate being 5 °C/min) for 12 hours under a flow of air, after which the product was disaggregated and sieved with a sieve with 45-$\mu$m meshes to finally obtain lithium composite oxide particles (hereinafter called "the lithium composite oxide particles of Example 1").

< Example 2 >

NiO, Co(OH)$_2$, Mn$_3$O$_4$ and LiOH·H$_2$O, which serve as the nickel, cobalt, manganese and lithium materials, respectively, were weighed so that the mole ratio of Ni : Co : Mn : Li is 0.33 : 0.33 : 0.33 : 0.05. Pure water was added to the weighed materials to form a slurry. The slurry was wet-milled by means of a circulation-type medium-stirring-type wet bead mill with stirring until the median particle diameter of the solid content becomes 0.20 $\mu$m.

The slurry was then spray dried with a spray dryer to form approximately spherical granulated particles having the diameter of about 6 $\mu$m and consisting of the nickel, cobalt, manganese, and lithium materials. To the granulated particles thus obtained, LiOH powder having the median diameter of 3 $\mu$m was added so that the mole ratio of Li be 1.00 relative to the total number of moles of Ni, Co, and Mn, followed by mixing with a high-speed mixer. Thus a mixture powder of granulated particles which is made of Ni, Co, Mn and the lithium material and the lithium material was obtained. The mixture powder was calcinated in a tunnel kiln under a flow of air at 955 °C for 15 hours, after which the product was disaggregated and sieved with a sieve with 45 $\mu$m meshes to finally obtain lithium composite oxide particles (hereinafter called "the lithium composite oxide particles of Example 2").

< Example 3 >

The same operation as in Example 2 was carried out, except that CoOOH was used as the cobalt material, to thereby obtain lithium composite oxide particles (hereinafter called "the lithium composite oxide particles of Example 3").

< Comparative Example 1 >

LiOH·H$_2$O, NiO, Co(OH)$_2$, and Mn$_3$O$_4$ were weighed so that the mole ratio of Li : Ni : Co : Mn is 1.05 : 0.33 : 0.33 : 0.33. The weighed materials were made into a slurry and wet-milled in the same manner as Example 1.
The slurry was then spray dried with a spray dryer to form approximately spherical granulated particles having the diameter of about 10 $\mu$m and containing NiO, Co(OH)$_2$, Mn$_3$O$_4$ and LiOH·H$_2$O.
The granulated particles were calcinated under a flow of air and disaggregated in the same manner as in Example 1 to thereby obtain lithium composite oxide particles (hereinafter called "the lithium composite oxide particles of Comparative Example 1").

< Comparative Example 2 >

The materials were weighed, wet-milled and spray dried in the same manner as in the Comparative Example 1 to thereby obtain approximately spherical granulated particles having the particle diameter of about 10 $\mu$m and containing NiO, Co(OH)$_2$, Mn$_3$O$_4$ and LiOH·H$_2$O.
To the granulated particles thus obtained, Bi$_2$O$_3$ powder was added so that the mole ratio of Bi becomes 0.01 relative to the total number of moles of Ni, Co and Mn, followed by mixing with a high-speed mixer. Thus, a mixture powder of the granulated particles containing NiO, Co(OH)$_2$, Mn$_3$O$_4$ and LiOH·H$_2$O and the Bi$_2$O$_3$ powder was obtained.
The mixture powder was then calcinated at 900 °C (at the temperature raising and decreasing rate of 5 °C /min) for 12 hours, after which the product was disaggregated and sieved with a sieve with 45-$\mu$m meshes to finally obtain lithium composite oxide particles (hereinafter called "the lithium composite oxide particle Comparative Example 2").

< Comparative Example 3 >

Prepared with coprecipitation method, particles that contain nickel, cobalt, and manganese at the mole ratio of 0.33 : 0.33 : 0.33 and have the average diameter of 15 $\mu$m were used. LiOH powder with the median diameter of 3 $\mu$m was added to the particles so that the mole ratio of LiOH be 1.05 relative to the total number of moles of Ni, Co, and Mn, followed by mixing. Thus, a mixture powder of the granulated particles and the lithium material was obtained.
The mixture powder was then calcinated in a tunnel kiln under a flow of air at 900 °C for 12 hours, after which the product was sieved with a sieve with 45-$\mu$m meshes to thereby obtain lithium composite oxide particles (hereinafter "lithium composite oxide particles of Comparative Example 3") .

[Evaluation of Lithium Composite Oxide Particles]

<Measurement of Various Properties with Mercury Intrusion Porosimetry and Other Means>

The pore-size distribution curves of the obtained lithium composite oxide particles of Examples 1-3 and Comparative Examples 1-3 are measured by means of mercury intrusion porosimetry. Autopore® III9420, manufactured by Micromeritics, was used as the measuring instrument for mercury intrusion porosimetry. The measurements mercury intrusion porosimetry were carried out at room temperature, with increasing the mercury pressure from 3.8 kPa to 410 MPa. The surface tension of mercury was assumed as 480 dyn/cm, and the contact angle of mercury was assumed as 141.3°.

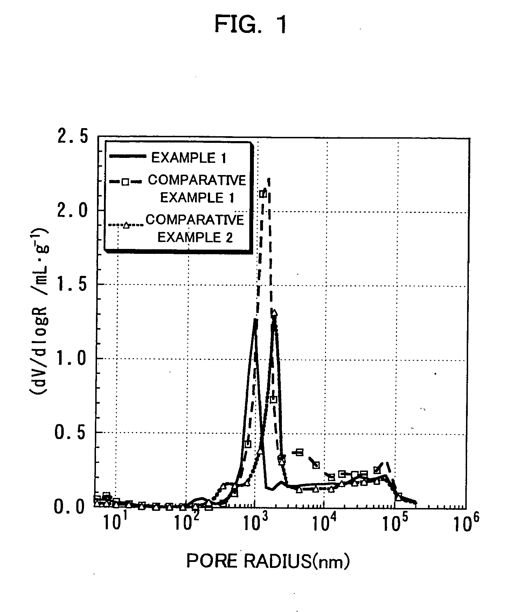

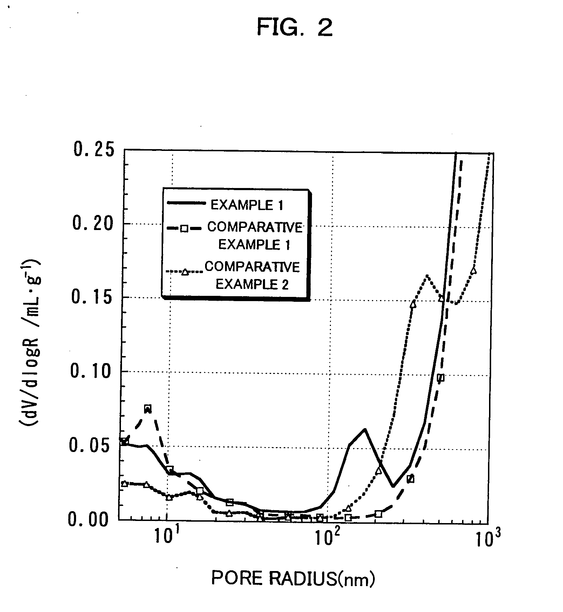

The pore-size distribution curves of the lithium composite oxide particles of Example 1 and Comparative Examples 1, 2 are indicated by solid lines in Figs. 1 and 2. Each of Figs. 1 and 2 shows pore-size distribution curves obtained by plotting with the pore radii of the lithium composite oxide particles as abscissa against the values obtained by differentiating the total volume of pores whose radii are equal to or larger than the corresponding pore radius of the abscissa with respect to the logarithm of the pore radius as ordinate. Fig. 2 is an enlargement view of a part of Fig. 1.

In addition, measurements by nitrogen adsorption BJH (Barrett, Joyner, Halenda) method were carried out on the lithium composite oxide particles of Examples 1-3 and Comparative Examples 1-3 to obtain the pore radius distributions of the particles. Using Autosorb® 1, manufactured by Quantachrome Corporation, as the measuring instrument for nitrogen adsorption BJH method, the measurements were carried out at liquid nitrogen temperature. Further, a particle size distribution analyzer (LA-920, manufactured by HORIBA) was used to measure particle size distributions, from which the median diameters of the particles were calculated.

Table 1 shows, for each of the lithium composite oxide particles of Examples 1-3 and Comparative Examples 1-3: the mercury intrusion volume with increase in pressure from 50 MPa to 150 MPa, obtained from the above-described pore-size distribution curve using the formula (A); the pore volumes and the average pore radii of the main peak and the sub peak, obtained from the pore-size distribution curve; the total volume of pores whose radii are 50 nm or smaller per 1 g of the lithium composite oxide porous particles, measured with nitrogen adsorption BJH method; the BET specific surface area; and the median diameter obtained by means of the particle size distribution analyzer. In order to eliminate an influence caused by spaces formed among the secondary particles, the average pore radii indicated here were obtained with respect to the pores having radii within the range of from 0.005 $\mu$m to 0.5 $\mu$m.

<Measurement for Other Properties>

The median diameter, the BET specific surface area, the primary particle diameter and the tap density were measured for each of the lithium composite oxide particles of Examples 1-3 and Comparative Examples 1-3. Measurement of the median diameter was carried out using the particle size distribution analyzer (LA-920, manufactured by HORIBA). Measurement of the BET specific surface area was carried out using Autosorb® 1, manufactured by Quantachrome Corporation. Measurement of the tap density was carried out by putting the particles (5 g) into a 10 ml glass graduated measuring cylinder and tapping the particles 200 times. Measurement of the primary particle diameter was measured with SEM observation. The results are shown in Table 1.

<Measurement of Low-Temperature Load Characteristics>

Using each of the lithium composite oxide particles of Examples 1-3 and Comparative Examples 1-3 (hereinafter may be collectively called "the positive electrode material" unless they need to be distinguished), a secondary battery was produced and the low-temperature load characteristics of the battery was measured according to the procedures described below.

The positive electrode material (75 weight %), acetylene black (20 weight %), and polytetrafluoroethylene powder (5 weight %) were weighed and mixed sufficiently in a mortar. The mixture was formed into a thin sheet and stamped into a disc with the diameter of 12 mm, with the disc weight being adjusted to be approximately 17 mg. The disc was attached to an expand metal made of Al using pressure to thereby obtain a positive electrode.

A graphite powder ($d_{002}$ = 3.35 angstrom) whose average particle diameter is between 8-10$\mu$ m was used as the negative electrode active material, while poly(vinylidene fluoride) was used as the binder. The negative electrode active material and the binder were weighed so that the weight ratio (negative electrode active material : binder) is 92.5 : 7.5, and mixed in a solvent, N-methyl pyrrolidone, to obtain a negative electrode composition slurry, which was applied to one surface of a copper foil with the thickness of 20 $\mu$m and then dried. The copper foil was stamped into a disc having the diameter of 12 mm and pressed with 0.5 ton/cm$^2$, whereby a negative electrode was obtained.

A battery was designed so that the capacity balance ratio R of the positive electrode and the negative electrode was within the range between 1.2-1.5. The capacity balance ratio R was determined in terms of formula R = $(Q_a \times W_a) / (Q_c \times W_c)$ where $Q_a$ represents a capacity (mAh/g) of Li ions that the negative electrode is able to absorb without precipitating Li metal, $Q_c$ represents a capacity (mAh/g) of Li ions that the positive electrode is able to deintercalated, and $W_a$ and $W_c$ represent the weights (g) of the negative and positive electrode active materials, respectively. Measurements of $Q_a$ and $Q_c$ were carried out by: assembling a 2032-type coin battery using either the positive electrode or the negative electrode, together with Li metal serving as a counter electrode, a separator and an electrolytic solution; and, under an electric current density as low as possible, e.g., 20 mA/g (active material) or smaller, measuring either the charging (Li absorbing) capacity between the self potential and the lower limit of 5 mV for the negative electrode or the charging capacity between the self potential and 4.2 V for the positive electrode.

The coin battery was assembled using the above positive and negative electrodes together with a nonaqueous electrolytic solution, which was obtained by dissolving $LiPF_6$ (1 mole/L) in a mixture solvent of ethylene carbonate (EC) + dimethyl carbonate (DMC) + ethyl methyl carbonate (EMC) (with the volume ratio of 3 : 3 : 4) so that the concentration of $LiPF_6$ was 1 mol/L. Using the assembled battery, initial conditioning with two charging/discharging cycles was carried out under an electric current density as low as possible with the upper and lower voltages of 4.1 V and 3.0 V, respectively. The discharge capacity [$Q_d$ (mAh/g)] per unit weight of the positive electrode active material at the second cycle was measured.

After relaxed sufficiently, the battery was charged for 72 minutes with a constant electric current of 1/3C, assuming one-hour-rate electric current [1C (mA)] = [$Q_d$ (mAh/g) $\times$ the positive electrode active material weight (g)]. Left still for 1 hour, the battery was held in a low-temperature atmosphere -30 °C for longer than 1 hour. The battery was then discharged for 10 seconds under 1/4 C while the electric current value (I) during the discharging and the difference ($\Delta V$) between the OCVs (Open Circuit Voltage) immediately before the discharging and 10 seconds after the discharging were measured. The resistance (R) was calculated in terms of the following formula.

$$R = \Delta V/I$$

Table 1 shows the resistance values of the batteries in which the positive electrode materials of Examples 1-3 and Comparative Examples 1-3 serve as the positive electrode active materials. The smaller resistance value, the more excellent low-temperature load characteristics can be estimated.

<Measurement of Coatability>

The coatability of the positive electrode materials of Examples 1-3 and Comparative Examples 1, 2 were measured by the following method.

The positive electrode material (85 weight %), acetylene black (10 weight %) and poly(vinylidene fluoride) (5 weight %), together with oxalic acid dihydroate in 0.3 weight % relative to the weight of the positive electrode material, were added to N-methyl pyrrolidone and dispersed to form a slurry. The poly(vinylidene fluoride) and oxalic acid dihydrate had been solved in N-methyl pyrrolidone beforehand. The ratio of the total volume of the positive electrode material, acetylene black and poly(vinylidene fluoride) to the entire slurry was adjusted to the values as indicated in Table 1 (42 weight % or 43 weight %). The viscosity of the slurry under the shear speed of 20 s$^{-1}$ was measured at 25 °C with a E-type viscometer. The measurement was carried out on the day (the first day) the slurry was prepared for every slurry, and also on the next day (the second day) of preparation for some of the slurries. The prepared slurries were sealed and kept at room temperature under normal pressure.

The viscosities measured in the above manner are shown in Table 1. The lower viscosity, the better coatability can be estimated.

[Table 1]

TABLE 1

| | Example 1 | Example 2 | Example 3 | Comparative Example 1 | Comparative Example 2 | Comparative Example 3 |
|---|---|---|---|---|---|---|
| Mercury Intrusion Volume with Pressure of 50-150 MPa (cm$^3$/g) | 0.0183 | 0.0120 | 0.0116 | 0.0213 | 0.0094 | 0.0090 |
| Pore Radius of Main Peak (nm) | 950 | 1200 | 1400 | 1200 | 2000 | 2900 |
| Pore Radius of Sub Peak (nm) | 170 | 210 | 72 | - | 400 | 73 |
| Pore Volume of Main Peak (cm$^3$/g) | 0.326 | 0.310 | 0.294 | 0.617 | 0.341 | 0.009 |

Table continued

| | Example 1 | Example 2 | Example 3 | Comparative Example 1 | Comparative Example 2 | Comparative Example 3 |
|---|---|---|---|---|---|---|
| Pore Volume of Sub Peak (cm$^3$/g) | 0.020 | 0.037 | 0.012 | -* | 0.049 | 0.216 |
| Average Pore Radius (nm) | 20.8 | 31.5 | 14.8 | 13.3 | 41.5 | 13.8 |
| Pore Volume by BJH Method (cm$^3$/g) | 0.003 | -** | -** | 0.002 | 0.002 | -** |
| Median Diameter of Particles ($\mu$m) | 4.4 | 5.8 | 5.7 | 9.6 | 9.1 | 13.3 |
| BET Specific Surface Area (m$^2$/g) | 1.20 | 1.12 | 0.77 | 1.00 | 0.90 | 0.40 |
| Tap Density (g/cm$^3$) | 1.6 | 1.6 | 1.9 | 1.2 | 1.9 | 2.6 |
| Primary Particle Diameter ($\mu$m) | 0.8 | 1.2 | 0.7 | 1.0 | -** | 0.8 |
| Resistance Value at -30°C ($\Omega$) | 388 | 290 | 286 | 390 | 535 | 516 |
| Solid Content (weight %) | 42 | 42 | 42 | 42 | 43 | -** |
| Slurry Viscosity (1st Day) (cp) | 2830 | 5230 | 3814 | 6625 | 5682 | -** |
| Slurry Viscosity (2nd Day) (cp) | 3342 | -** | -** | 8280 | 5290 | -** |
| Any sub peak recognized. ** No data. | | | | | | |

< Evaluation of Data >

Concerning the lithium composite oxide particles of Comparative Example 1, as understood from Fig. 1, the main peak is observed with its peak top is at radius 1200 nm on the pore-size distribution curve, although no clearly recognizable sub peak is not observed. Additionally, as is evident from Table 1, the mercury intrusion volume with increase in pressure from 50 MPa to 150 MPa is 0.0213 cm$^3$/g, which value is larger than the range defined in the present invention. The lithium composite oxide particles of Comparative Example 1 therefore do not meet both Conditions (A) and (C) of the present invention.
Besides, as clearly shown in Table 1, the lithium composite oxide particles of Comparative Example 1 are good in resistance value at -30 °C but high in slurry viscosity, particularly with a sharp increase from the first day to the second day. The results indicate that the lithium composite oxide particles of Comparative Example 1 do not acquire adequate coatability.

Concerning the lithium composite oxide particles of Comparative Example 2, as understood from Fig. 1, a sub peak is observed on the pore-size distribution curve in addition to the main peak whose peak top is at the radius of 2000 nm, although the peak top of the sub peak is at the radius of 400 nm, which value is larger than the range defined in the present invention. In addition, as is evident from Table 1, the mercury intrusion volume was 0.0094 cm$^3$/g, failing to reach the range defined in the present invention. The results show that the lithium composite oxide particles of Comparative Example 2 do not meet both Conditions (B) and (C) of the present invention.

The lithium composite oxide particles of Comparative Example 2 has, as shown in Table 1, the resistance value at -30 °C as high as 535 Ω and is therefore not considered to have adequate low-temperature load characteristics.

Concerning the lithium composite oxide particles of Comparative Example 3, the pore-size distribution curve shows the main peak whose peak top is at the radius of 2900 nm together with a sub peak, although the peak top of the sub peak is at the radius of 73 nm, below the range defined in the present invention. Also, as understood from Table 1, the mercury intrusion volume is 0.0090 cm$^3$/g, failing to reach the range of the present invention. Consequently, the lithium composite oxide particles of Comparative Example 3 also fails to meet Conditions (B) and (C).

In addition, since also having the resistance value at -30 °C as high as 516 Ω, the lithium composite oxide particles of Comparative Example 3 is therefore not considered to have adequate low-temperature load characteristics.

On the other hand, the lithium composite oxide particles of Example 1 show, as shown in Fig. 1, the main peak whose peak top is at the pore radius of 950 nm as well as the sub peak whose peak top is at pore radius 170 nm on the pore-size distribution curve. Further, the mercury intrusion volume is 0.0183 cm$^3$/g, within the range of the present invention. In addition, as shown in Table 1, the lithium composite oxide particles of each of Example 2 and Example 3 have a sub peak within the range of the present invention on the pore-size distribution curves and the mercury intrusion volume within the range defined in the present invention. Consequently, the lithium composite oxide particles of each of Examples 1-3 meet all of the Conditions (A)-(C) of the present invention.

In addition, Table 1 shows that the lithium composite oxide particles of each of Examples 1-3 are low in both the resistance value at -30 °C and the slurry viscosity, and are therefore considered to be excellent in both low-temperature load characteristics and coatability.

The present invention has been described in detail with reference to specific embodiments, but it is obvious for those skilled in the art that various modifications can be suggested without departing from the scope of the present invention.

The present application is based on the descriptions of Japanese Patent Applications Nos. 2003-336335, 2003-336336 and 2003-336337, which were filed on September 26, 2003, and Japanese Patent Application No. 2004-278953, which was filed on September 27, 2004, and their entireties are hereby included by reference.

[Industrial Applicability]

The lithium composite oxide particles for a positive electrode material of a lithium secondary battery according to the present invention can be used together with a binder to form an active material layer on a current collector, and the resultant positive electrode is applicable for a wide range of uses of a lithium secondary battery, such as mobile electronic devices, communication devices and vehicle driving power source. The present invention thus offers a great industrial values.

**Claims**

**1.** A lithium composite oxide particle for use as a positive electrode material of a lithium secondary battery, wherein when measured by mercury intrusion porosimetry, said lithium composite oxide particle meets Condition (A) and at least either Condition (B) or Condition (C), where:

Condition (A) represents that according to a mercury intrusion curve with increase in pressure from 50 MPa to 150 MPa, the mercury intrusion volume is 0.02 cm$^3$/g or smaller;

Condition (B) represents that according to the mercury intrusion curve with increase in pressure from 50 MPa to 150 MPa, the mercury intrusion volume is 0.01 cm$^3$/g or larger; and

Condition (C) represents that the average pore radius is between 10 nm and 100 nm inclusive and that the pore-size distribution curve has a main peak whose peak top is at a pore radius of between 0.5 μm and 50 μm inclusive and a sub peak whose peak top is at a pore radius of between 80 nm and 300 nm inclusive.

**2.** The lithium composite oxide particle for a lithium secondary battery positive electrode material according to claim 1, wherein when measured by a nitrogen adsorption method, the total volume of pores having a radius of 50 nm or smaller is equal to or less than 0.01 cm$^3$ per gram of the lithium composite oxide particle.

**3.** The lithium composite oxide particle for a lithium secondary battery positive electrode material according to claim 1 or claim 2, wherein the lithium composite oxide particle contains at least Ni and Co.

**4.** The lithium composite oxide particles for a lithium secondary battery positive electrode material according to any one of claims 1-3, wherein composition is represented by the following formula (1),

$$Li_xNi_{(1-y-z)}Co_yM_zO_2 \qquad (1)$$

where
M represents at least one element selected from the group consisting of Mn, Al, Fe, Ti, Mg, Cr, Ga, Cu, Zn, and Nb,
$x$ represents a number of $0 < x \leq 1.2$,
$y$ represents a number of $0.05 \leq y \leq 0.5$, and
z represents a number of $0.01 \leq z \leq 0.5$.

**5.** A positive electrode for a lithium secondary battery, comprising:

a current collector; and
a positive electrode active material layer disposed on said current collector;
wherein said positive electrode active material layer contains at least a binder and the lithium composite oxide particles for a lithium secondary battery positive electrode material according to any one of claims 1-4.

**6.** A lithium secondary battery comprising:

a positive electrode capable of absorbing and desorbing lithium;
a negative electrode capable of absorbing and desorbing lithium; and
an organic electrolytic solution containing a lithium salt as an electrolyte;

wherein said positive electrode is the positive electrode for a lithium secondary battery according to claim 5.

# FIG. 1

# FIG. 2

**INTERNATIONAL SEARCH REPORT**

| International application No. |
|---|
| PCT/JP2004/014090 |

| A. CLASSIFICATION OF SUBJECT MATTER |
|---|
| Int.Cl$^7$ H01M4/58, 4/02, 10/40 |

According to International Patent Classification (IPC) or to both national classification and IPC

| B. FIELDS SEARCHED |
|---|
| Minimum documentation searched (classification system followed by classification symbols)<br>Int.Cl$^7$ H01M4/58, 4/02, 10/40 |

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | WO 01/092158 A1 (Seimi Chemical Co., Ltd.),<br>06 December, 2001 (06.12.01),<br>Claims 1 to 14; examples<br>& JP 2001-588137 X  & US 2004/23113 A1<br>& CN 1431972 A | 1-6 |
| P,A | JP 2003-277062 A (Japan Science and Technology Corp.),<br>02 October, 2003 (02.10.03),<br>Claims 1 to 4; examples<br>& WO 2003/80514 A1 | 1-6 |
| A | JP 2003-59489 A (Toyota Motor Corp.),<br>28 February, 2003 (28.02.03),<br>Claims 1 to 8; examples<br>(Family: none) | 1-6 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 December, 2004 (27.12.04) | Date of mailing of the international search report<br>18 January, 2005 (18.01.05) |
|---|---|
| Name and mailing address of the ISA/<br>Japanese Patent Office | Authorized officer |
| Facsimile No. | Telephone No. |

Form PCT/ISA/210 (second sheet) (January 2004)

| INTERNATIONAL SEARCH REPORT | International application No. |
|---|---|
| | PCT/JP2004/014090 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2001-135314 A  (Mitsubishi Chemical Corp.), 18 May, 2001 (18.05.01), Claims 1 to 8; examples (Family: none) | 1-6 |
| A | JP 2000-323123 A  (Dowa Mining Co., Ltd.), 24 November, 2000 (24.11.00), Claims 1 to 5; examples (Family: none) | 1-6 |
| A | JP 2000-315502 A  (Dowa Mining Co., Ltd.), 14 November, 2000 (14.11.00), Claims 1 to 3; examples (Family: none) | 1-6 |

Form PCT/ISA/210 (continuation of second sheet) (January 2004)